# EUROPÄISCHE PATENTSCHRIFT

(11) **EP 2 245 480 B1**
(45) Veröffentlichungstag und Bekanntmachung des Hinweises auf die Patenterteilung: **17.10.2012**
(21) Anmeldenummer: 09718019.4
(22) Anmeldetag: 18.02.2009
(51) Int. Cl.: G01S 19/07

(54) **VERWENDUNG VON PHASOR MEASUREMENT UNITS FÜR DIFFERENTIELLE GLOBALE SATELLITENNAVIGATIONSSYSTEME (GNSS)**
USE OF PHASOR MEASUREMENT UNITS FOR DIFFERENTIAL GLOBAL NAVIGATION SATELLITE SYSTEMS (DGNSS)
UTILISATION D'UNITÉS DE MESURE DE PHASE POUR DES SYSTÈMES DIFFÉRENTIELS DE NAVIGATION PAR SATELLITES (GNSS)

(30) Priorität: 29.02.2008 DE 102008011824
(43) Veröffentlichungstag der Anmeldung: 03.11.2010
(73) Patentinhaber: Siemens Aktiengesellschaft, 80333 München (DE)
(72) Erfinder: OLPP, Dieter, 81829 München (DE)
(86) Internationale Anmeldenummer: PCT/EP2009/051928
(87) Internationale Veröffentlichungsnummer: WO 2009/109465

(56) Entgegenhaltungen:
- DE-A1- 19 836 966
- US-A1- 2004 073 387
- US-A1- 2006 155 434
- US-A1- 2006 262 006

## Beschreibung

Die Erfindung betrifft die Bestimmung und Übermittlung von Korrekturdaten eines Globalen Satellitennavigationssystems.

Globale Satellitennavigationssysteme (Global Navigation Satellite Systems, GNSS) wie beispielsweise GPS sind seit langem bekannt. Zur Erhöhung der Genauigkeit der Positionsbestimmung wurden differentielle GNSS als Erweiterung der bis dato üblichen GNSS vorgestellt, bei denen eine Vielzahl von Referenzstationen benutzt wird, deren geographische Positionen beispielsweise zum Zeitpunkt der Installation der Referenzstationen exakt bestimmt wurden, beispielsweise durch einmalige, hochgenaue geodätische Messungen.

Jede Referenzstation ist mit einem GNSS-Empfänger, d.h. mit einem Empfänger für das GNSS ausgestattet, mit dessen Hilfe die Referenzstation in regelmäßigen Abständen ihre aktuell gemessene Position über das GNSS bestimmt. Die gemessene Pcsition kann nun aufgrund entfernungsabhängig wirkender Fehlereinflüsse wie beispielsweise der Stärke der Ionosphärentätigkeit, unzureichend modellierter Satellitenbahnen und/oder Ausbreitungsverzögerungen des Signals in der Troposphäre von der exakten Position abweichen. Dementsprechend wäre auch eine Positionsbestimmung eines Benutzers des GNSS fehlerhaft.

Wie beispielsweise aus DE 198 36 966 A1 bekannt lassen sich jedoch aus dem Vergleich der bekannten, exakten Position der Referenzstation mit der gemessenen Position dieser Referenzstation Korrekturdaten für das GNSS berechnen, mit deren Hilfe die fehlerhafte Positionsbestimmung korrigiert werden kann. Im einfachsten Fall können die Korrekturdaten beispielsweise von den gemessenen Positionen des Benutzers abgezogen werden.

In der Nähe der Referenzstation, für die die Korrekturdaten bestimmt wurden, können diese Korrekturdaten von einem Benutzer verwendet werden, der seine Position mit einem GNSS-Empfänger bestimmen will, da anzunehmen ist, dass sich in der näheren Umgebung der Referenzstation im Wesentlichen derselbe Messfehler auswirkt bzw. dieselben Fehlereinflüsse wirken. Der GNSS-Empfänger des Benutzers unterliegt demnach demselben Fehler wie der Empfänger der Referenzstation. Die Korrekturdaten werden daher beispielsweise über Rundfunk, Mobilfunk und/oder Internet an die Benutzer des GNSS übertragen, so dass diese ihre gemessene Position ebenfalls korrigieren können.

Entfernungsabhängig wirkende Fehlereinflüsse können durch eine gemeinsame Auswertung von Daten aus einem Netz von Referenzstationen stark reduziert werden. Eine Vernetzung der Referenzstationen bringt den Vorteil mit sich, dass räumliche Änderungen der Fehlereinflüsse aus Beobachtungen flächenhaft verteilter und hochgenau koordinierter Referenzstationen wesentlich besser geschätzt werden können als bei der Betrachtung einzelner Referenzstationen. Die Korrekturdaten und/oder die aktuell gemessenen Positionen der Referenzstation werden daher von den Referenzstationen über ein entsprechendes Netzwerk an eine Zentrale übertragen, wo sie gesammelt und weiter ausgewertet werden. Die in der Zentrale aggregierten Korrekturdaten werden schließlich den Benutzern des GNSS beispielsweise über Rundfunk, Mobilfunk und/oder Internet zur Verfügung gestellt.

Ein differentielles GNSS setzt ein dichtes Netz von Referenzstationen voraus. Jede Referenzstation muss dabei einen GNSS-Empfänger beinhalten und mit einer Kommunikationsleitung mit der Zentrale verbunden sein. Derartige Netze von Referenzstationen sind beispielsweise die Systeme SAPOS und ASCOS.

Neben der Notwendigkeit, dass jede Referenzstation mit einem GNSS-Empfänger ausgestattet sein muss, erfordert insbesondere die Verbindung mit der Zentrale einen erheblichen finanziellen Aufwand sowohl für die Einrichtung der Verbindung als auch für den Unterhalt und den Betrieb dieses Netzes.

Aufgabe der Erfindung ist es daher, ein kostengünstiges System anzugeben, mit dem Korrekturdaten eines differentiellen GNSS bestimmt und an eine Zentrale übermittelt werden können.

Diese Aufgabe wird durch die in den unabhängigen Ansprüchen angegebenen Erfindungen gelöst. Vorteilhafte Ausgestaltungen ergeben sich aus den abhängigen Ansprüchen.

Bei dem erfindungsgemäßen System wird ausgenutzt, dass in bereits vorhandenen Stromübertragungsnetzen seit einigen Jahren vermehrt Phasor-Messeinrichtungen, sog. "Phasor Measurement Units" (PMU), eingesetzt werden. Ein derartiges System wird bspw. in der US 7 200 500 B2 beschrieben. Eine PMU ist in der Lage, an einer bestimmten Position des Netzes die momentane Spannung und den Phasenwinkel mit einer sehr genauen Zeitsynchronisation zu messen, um die Phasenwinkel von weit voneinander entfernt liegenden Punkten im Netz vergleichbar zu machen. Zu diesem Zweck sind die PMUs jeweils mit einem GNSS-Empfänger ausgestattet, da die Positionsbestimmung über den Vergleich von Signallaufzeiten zu verschiedenen Satelliten geschieht und daher eine genaue Zeitsynchronisierung voraussetzt.

Die von dem PMUs gemessenen Daten werden zum Zwecke einer netzwerkweiten Überwachung (wide area monitoring) in einer Zentrale zusammengeführt. Die PMUs sind daher über Kommunikationsverbindungen zu einem PMU-Netzwerk verschaltet und mit der Zentrale verbunden. Die Phasor-Daten und entsprechende Zeitstempel werden über die Kommunikationsverbindungen an die Zentrale übertragen.

Das erfindungsgemäße System verwendet das vorhandene PMU-Netzwerk als Netz von Referenzstationen unter Ausnutzung der in den PMUs integrierten GNSS-Empfänger für ein differentielles GNSS oder als Erweiterung eines solchen Netzes. Dazu ist lediglich ein geringer Mehraufwand nötig:
- Die genauen geografischen Positionen der GNSS-Empfänger der PMUs werden beispielsweise durch geodätische Messungen einmalig bestimmt.
- Im laufenden Betrieb werden zusätzlich zu den Phasor-Daten und den Zeitstempeln der PMUs die über das GNSS bestimmten Positionen und/oder die daraus ermittelten Korrekturdaten über die Kommunikationsverbindungen an die Zentrale des PMU-Netzwerkes übertragen.
- In der Zentrale werden die eingehenden Korrekturdaten oder die in der Zentrale aus den Positionsdaten berechneten Korrekturdaten aggregiert und den GNSS-Benutzern zur Verfügung gestellt. Da die Zentrale ursprünglich lediglich als Zentrale des Stromübertragungsnetzes arbeitet und daher die Funktion der Berechnung und/oder Weiterverarbeitung der GNSS-Korrekturdaten nicht vorgesehen ist, können die von den PMUs eintreffenden Korrektur- oder Positionsdaten alternativ von der Zentrale an eine spezielle GNSS-Zentrale weitergeleitet werden, wo dann die weitere Datenverarbeitung erfolgt.

Der Vorteil des erfindungsgemäßen Systems liegt darin, dass eine ohnehin vorhandene Einrichtung, nämlich das Netzwerk von PMUs mit GNSS-Empfängern und Kommunikationsverbindungen, für einen weiteren als den ursprünglichen Zweck genutzt werden kann, nämlich zusätzlich auch zur Realisierung eines Netzes von Referenzstationen für ein differentielles GNSS. Dies erspart einen Großteil des oben beschriebenen Aufwands für die Einrichtung und den Betrieb eines eigenen Netzes aus GNSS-Referenzstationen.

Aufgrund der enormen Größe von Stromübertragungsnetzen lässt sich eine entsprechend große Anzahl von Referenzstationen und damit eine sehr genaue Positionsbestimmung über das differentielle GNSS realisieren.

Die Übertragung von Phasor-Daten ist durch den Standard IEEE C37.118 geregelt, welcher unter anderem ein Datenformat für die Messwerte definiert. Dieses Datenformat könnte ggf. um ein zusätzliches Feld für die über das GNSS bestimmte Position erweitert werden.

Alternativ zur oben beschriebenen Verwendung der Kommunikationsverbindungen des Stromübertragungsnetzes kann auch auf die Kommunikationsverbindungen eines anderen Kommunikationsnetzes, bspw. ein Mobilfunknetz oder ein Festnetz, zurück gegriffen werden.

Weitere Vorteile, Merkmale und Einzelheiten der Erfindung ergeben sich aus dem im Folgenden beschriebenen Ausführungsbeispiel sowie anhand der Zeichnung.

Dabei zeigt:

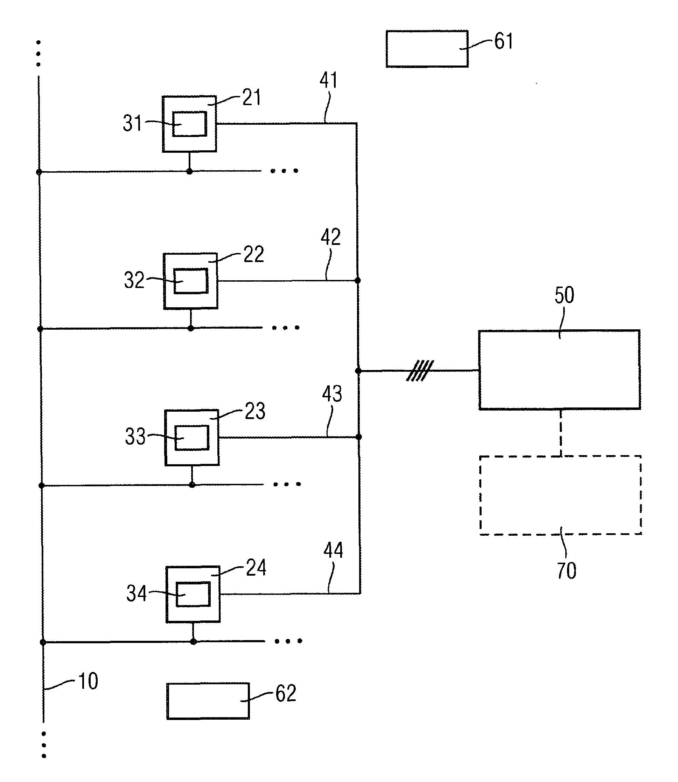

Figur 1 ein Stromübertragungsnetz mit Phasor Measurement Units zur Verwendung als Referenzstationen eines differentielle GNSS.

Die Figur 1 zeigt in schematischer Darstellung ein Stromübertragungsnetz 10 mit mehreren, im Beispiel mit vier Phasor Measurement Units 21-24 (PMU), die jeweils einen GNSS-Empfänger 31-34 enthalten. Die PMUs 21-24 sind über Kommunikationsverbindungen 41-44 mit einer Zentrale 50 des Stromübertragungsnetzes verbunden, an die sie die Phasor-Daten und die Zeitstempel übertragen. Erfindungsgemäß erfüllen die PMUs 21-24 neben ihrer eigentlichen Funktion als Spannungs- und Phasenwinkelmessstationen zusätzlich die Funktion von Referenzstationen eines differentiellen GNSS-Netzes.

Zu einem bestimmten Zeitpunkt, beispielsweise im Rahmen der Installation der PMUs 21-24, wird einmalig eine exakte Positionsbestimmung der PMUs 21-24 durchgeführt, beispielsweise durch eine geodätische Messung. Während des Betriebes werden über das GNSS wiederholt in an sich bekannter Weise mit Hilfe der GNSS-Empfänger 31-34 die Positionen der einzelnen PMUs 21-24 gemessen. Die gemessenen Positionen werden dann mit den im Vorfeld bestimmten, exakten Positionen verglichen, wobei insbesondere eine Differenz zwischen der gemessenen Position und der exakten Position gebildet wird. Wie oben beschrieben ist nicht auszuschließen, dass die gemessene Position einer (oder mehrerer) der PMUs 21-24, beispielsweise PMU 21, von der exakten Position abweicht. Dies deutet darauf hin, dass das GNSS nicht korrekt arbeitet, dass also Positionen von Benutzern 61, 62 des GNSS nicht unbedingt korrekt bestimmt werden.

Der Vergleich resultiert für jede der PMUs 21-24 in Korrekturdaten, die verwendet werden, um den Messfehler in Form der Abweichung der gemessenen Position von der exakten Position auszugleichen. Dabei kann der Vergleich entweder jeweils in der PMU 21-24 stattfinden oder erst nach Übermittlung der gemessenen Positionen in der Zentrale 70. Im ersteren Fall ist in jeder PMU 21-24 ihre jeweilige exakte Position gespeichert und die Berechnung der Korrekturdaten erfolgt jeweils direkt in der PMU 21-24. Die so berechneten Korrekturdaten werden über die Kommunikationsverbindungen 41-44 an die Zentrale 50 übermittelt. Im letzteren Fall wird über die Kommunikationsverbindungen 41-44 die jeweils gemessene Position der PMUs 21-24 direkt an die Zentrale 50 übertragen. In der Zentrale 50 sind die exakten Positionen der PMUs 21-24 gespeichert, der Vergleich sowie die Bestimmung der Korrekturdaten finden in der Zentrale 50 statt.

Die Korrekturdaten werden in der Zentrale 50 gesammelt und an die Benutzer 61, 62 des GNSS beispielsweise über Rundfunk, Mobilfunk oder Internet übertragen, wo sie vom jeweiligen GNSS-Empfänger (nicht im Einzelnen dargestellt) bei der Positionsbestimmung berücksichtigt werden.

Im Allgemeinen ist anzunehmen, dass die Zentrale 50 lediglich die Zentrale des Stromübertragungsnetzes ist. Die Zentrale 50 des Stromübertragungsnetzes ist dann ihrerseits mit einer (GNSS-) Zentrale 70 verbunden, an die die in den Referenzstationen ermittelten Korrekturdaten bzw. die gemessenen Positionen übermittelt werden. Die übrigen, oben beschriebenen Funktionen der Zentrale 50 werden dann von der Zentrale 70 übernommen.

Die Kommunikationsverbindungen 41-44 sind bevorzugt die Kommunikationsverbindungen des Stromübertragungsnetzes. Alternativ können aber auch Kommunikationsverbindungen eines anderen Kommunikationsnetzes wie bspw. eines Mobilfunk- oder Festnetzes verwendet werden. In diesem Fall würden die von den PMUs gesammelten und an die Zentrale 50, 70 zu übermittelnden Daten, d.h. gemessenen Positionen und/oder die Korrekturdaten, ein das Kommunikationsnetz eingespeist und dort unter Verwendung der bestehenden Netzverbindungen an die Zentrale übertragen.

## Patentansprüche

1. Verfahren zur Bestimmung und Übermittlung von Korrekturdaten für ein Globales Satellitennavigationssystem (GNSS) mit mindestens einer Referenzstation, bei dem
- die Position der Referenzstation mit dem GNSS wiederholt gemessen und die gemessene Position in der Referenzstation zur Bestimmung der Korrekturdaten mit der exakten Position der Referenzstation verglichen wird und
- die Korrekturdaten von der Referenzstation an eine Zentrale (50, 70) übermittelt werden,
**dadurch gekennzeichnet, dass**
- als Referenzstation eine einen GNSS-Empfänger aufweisende Phasor Measurement Unit (PMU) eines Stromübertragungsnetzes verwendet wird und
- die Korrekturdaten über Kommunikationsverbindungen des Stromübertragungsnetzes oder über Kommunikationsverbindungen eines anderen Kommunikationsnetzes, insbesondere eines Mobilfunk- oder Festnetzes, an die Zentrale (50, 70) übermittelt werden.

2. Verfahren zur Bestimmung von Korrekturdaten für ein Globales Satellitennavigationssystem (GNSS) mit mindestens einer Referenzstation, bei dem
- die Position der Referenzstation mit dem GNSS wiederholt gemessen und die gemessene Position an eine Zentrale (50, 70) übermittelt wird und
- in der Zentrale zur Bestimmung der Korrekturdaten die gemessene Position der Referenzstation mit einer exakten Position der Referenzstation verglichen wird,
**dadurch gekennzeichnet, dass**
- als Referenzstation eine einen GNSS-Empfänger aufweisende Phasor Measurement Unit (PMU) eines Stromübertragungsnetzes verwendet wird und
- die gemessene Position der Referenzstation über Kommunikationsverbindungen des Stromübertragungsnetzes oder über Kommunikationsverbindungen eines anderen Kommunikationsnetzes, insbesondere eines Mobilfunk- oder Festnetzes, an die Zentrale (50, 70) übermittelt wird.

3. Verfahren nach Anspruch 1 oder 2, **dadurch gekennzeichnet, dass** die Korrekturdaten die Differenz zwischen der exakten Position und der gemessenen Position der Referenzstation sind.

4. Verfahren nach einem der vorhergehenden Ansprüche, **dadurch gekennzeichnet, dass** die Korrekturdaten in der Zentrale (50, 70) gesammelt werden.

5. Verfahren nach einem der vorhergehenden Ansprüche, **dadurch gekennzeichnet, dass** die Korrekturdaten von der Zentrale (50, 70) über Rundfunk, Mobilfunk oder Internet an Benutzer des GNSS übertragen werden.

6. Verfahren nach einem der vorhergehenden Ansprüche, **dadurch gekennzeichnet, dass** die exakte Position der Referenzstation einmalig vor der Verwendung der Phasor Measurement Unit als Referenzstation ermittelt wird.

7. System zur Bestimmung und Übermittlung von Korrekturdaten eines Globalen Satellitennavigationssystems mit mindestens einer Referenzstation, die über Kommunikationsverbindungen mit einer Zentrale (50, 70) verbunden ist,
wobei die Referenzstation einen GNSS-Empfänger für das Globale Satellitennavigationssystem zur Messung ihrer Position beinhaltet und ausgebildet ist, um ihre gemessene Position und/oder Korrekturdaten für das GNSS über die Kommunikationsverbindungen an die Zentrale (50, 70) zu übermitteln, **dadurch gekennzeichnet, dass**
die Referenzstation die einen GNSS-Empfänger aufweisenden Phasor Measurement Unit des Stromübertragungsnetzes ist und die Kommunikationsverbindungen Teil eines Stromübertragungsnetzes oder eines anderen Kommunikationsnetzes, insbesondere eines Mobilfunk- oder Festnetzes, sind.

## Claims

1. Method for determining and transmitting correction data for a global navigation satellite system (GNSS) having at least one reference station, wherein
- the position of the reference station is repeatedly measured by means of the GNSS and the measured position is compared in the reference station with the exact position of the reference station in order to determine the correction data, and
- the correction data is transmitted from the reference station to a control centre (50, 70),
**characterised in that**
- a phasor measurement unit (PMU) of an electric power transmission network is used as the reference station, and
- the correction data is transmitted to the control centre (50, 70) via communication links of the electric power transmission network or via communication links of a different communication network, in particular a mobile communications or fixed line network.

2. A method for determining correction data for a global navigation satellite system (GNSS) having at least one reference station, wherein
- the position of the reference station is repeatedly measured by means of the GNSS and the measured position is transmitted to a control centre (50, 70), and
- in the control centre the measured position of the reference station is compared with an exact position of the reference station in order to determine the correction data, **characterised in that**
- a phasor measurement unit (PMU) of an electric power transmission network is used as the reference station, and
- the measured position of the reference station is transmitted to the control centre (50, 70) via communication links of the electric power transmission network or via communication links of a different communication network, in particular a mobile communications or fixed line network.

3. The method as claimed in claim 1 or 2, **characterised in that** the correction data is the difference between the exact position and the measured position of the reference station.

4. The method as claimed in one of the preceding claims, **characterised in that** the correction data is collected in the control centre (50, 70).

5. The method as claimed in one of the preceding claims, **characterised in that** the correction data is transferred from the control centre (50, 70) via radio, cellular mobile telephony or internet to users of the GNSS.

6. The method as claimed in one of the preceding claims, **characterised in that** the exact position of the reference station is determined one time only prior to the use of the phasor measurement unit as a reference station.

7. A system for determining and transmitting correction data of a global navigation satellite system having at least one reference station which is connected to a control centre (50, 70) via communication links,
wherein the reference station includes a GNSS receiver for the global navigation satellite system for the purpose of measuring its position and is embodied to transmit its measured position and/or correction data for the GNSS to the control centre (50, 70) via the communication links,
**characterised in that**
the reference station is the phasor measurement units of the electric power transmission network comprising a GNSS receiver and the communication links are part of an electric power transmission network or a different communication network, in particular a mobile communications or fixed line network.

## Revendications

1. Procédé pour déterminer et transmettre des données de correction pour un système global de navigation par satellite (GNSS) avec au moins une station de référence, dans lequel :
- la position de la station de référence est mesurée de manière répétée avec le GNSS et la position mesurée est comparée avec la position exacte de la station de référence dans la station de référence pour déterminer les données de correction et
- les données de correction sont transmises de la station de référence à une centrale (50, 70),
**caractérisé en ce que** :
- une unité de mesure de phaseur (PMU) d'un réseau de transport d'électricité, laquelle comporte un récepteur GNSS, est utilisée en tant que station de référence et
- les données de correction sont transmises à la centrale (50, 70) via des liaisons de communication du réseau de transport d'électricité ou via des liaisons de communication d'un autre réseau de communication, en particulier d'un réseau de téléphonie mobile ou fixe.

2. Procédé pour déterminer des données de correction pour un système global de navigation par satellite (GNSS) avec au moins une station de référence, dans lequel :
- la position de la station de référence est mesurée de manière répétée avec le GNSS et la position mesurée est transmise à une centrale (50, 70) et
- la position mesurée de la station de référence est comparée avec une position exacte de la station de référence dans la centrale pour déterminer les données de correction,
**caractérisé en ce que** :
- une unité de mesure de phaseur (PMU) d'un réseau de transport d'électricité, laquelle comporte un récepteur GNSS, est utilisée en tant que station de référence et
- la position mesurée de la station de référence est transmise à la centrale (50, 70) via des liaisons de communication du réseau de transport d'électricité ou via des liaisons de communication d'un autre réseau de communication, en particulier d'un réseau de téléphonie mobile ou fixe.

3. Procédé selon la revendication 1 ou 2, **caractérisé en ce que** les données de correction sont la différence entre la position exacte et la position mesurée de la station de référence.

4. Procédé selon l'une des revendications précédentes, **caractérisé en ce que** les données de correction sont collectées dans la centrale (50, 70).

5. Procédé selon l'une des revendications précédentes, **caractérisé en ce que** les données de correction sont transmises de la centrale (50, 70) à des utilisateurs du GNSS par radiodiffusion, par téléphonie mobile ou via l'internet.

6. Procédé selon l'une des revendications précédentes, **caractérisé en ce que** la position exacte de la station de référence est déterminée une fois avant l'utilisation de l'unité de mesure de phaseur en tant que station de référence.

7. Système pour déterminer et transmettre des données de correction d'un système global de navigation par satellite (GNSS) avec au moins une station de référence qui est reliée à une centrale (50, 70) via des liaisons de communication, la station de référence contenant un récepteur GNSS pour le système global de navigation par satellite pour mesurer sa position et étant réalisée pour transmettre à la centrale (50, 70) sa position mesurée et/ou des données de correction pour le GNSS via les liaisons de communication, **caractérisé en ce que** la station de référence est l'unité de mesure de phaseur du réseau de transport d'électricité qui comporte un récepteur GNSS et les liaisons de communication font partie d'un réseau de transport d'électricité ou d'un autre réseau de communication, en particulier d'un réseau de téléphonie mobile ou fixe.
